Europäisches Patentamt

European Patent Office

Office européen des brevets

(19)

(11) **EP 0 461 949 B1**

(12) **FASCICULE DE BREVET EUROPEEN**

(45) Date de publication et mention
de la délivrance du brevet:
**17.04.1996 Bulletin 1996/16**

(51) Int. Cl.[6]: **B01J 23/02**, B01J 23/10,
B01J 32/00, B01J 35/10,
B01D 53/94

(21) Numéro de dépôt: **91401427.9**

(22) Date de dépôt: **31.05.1991**

(54) **Composition à base d'alumine dopée par des terres rares et/ou alcalino-terreux et procédé de fabrication**

Zusammensetzung auf der Basis von mit seltenen Erden und/oder Erdalkalien dotiertem Aluminiumoxid und Herstellungsverfahren

Composition containing alumina doped with rare earths and/or alkaline earths and process for its preparation

(84) Etats contractants désignés:
**AT BE CH DE DK ES FR GB GR IT LI LU NL SE**

(30) Priorité: **13.06.1990 FR 9007322**

(43) Date de publication de la demande:
**18.12.1991 Bulletin 1991/51**

(73) Titulaire: **RHONE-POULENC CHIMIE**
**F-92408 Courbevoie Cédex (FR)**

(72) Inventeurs:
• **Bouruet-Aubetot, Alain**
**F-94160 Saint Mande (FR)**
• **Chopin, Thierry**
**F-98200 Saint Denis (FR)**

• **Touret, Olivier**
**F-93300 Aubervilliers (FR)**

(74) Mandataire: **Esson, Jean-Pierre et al**
**RHONE-POULENC CHIMIE,**
**Direction de la Propriété Industrielle,**
**25, quai Paul Doumer**
**F-92408 Courbevoie Cédex (FR)**

(56) Documents cités:
EP-A- 0 308 140      EP-A- 0 321 949
EP-A- 0 333 559      US-A- 4 061 594
US-A- 4 548 709      US-A- 4 711 872
US-A- 4 722 920      US-A- 4 771 029

**Description**

La présente invention concerne une composition à base d'alumine notamment utile comme matière première pour la fabrication de catalyseur ou support de catalyseur et des procédés de fabrication de cette composition.

Elle concerne plus particulièrement une composition à base d'alumine comprenant une surface spécifique élevée développée par des pores de diamètre moyen compris entre 10 nm et 100 nm.

L'alumine activée poreuse est utilisée depuis très longtemps comme support de catalyseur, adsorbant, etc. Dans le domaine de la catalyse hétérogène et notamment de la catalyse pour le traitement des gaz d'échappement des moteurs à combustion interne, l'alumine doit présenter une surface spécifique élevée et thermiquement stable et de plus une porosité adaptée en dimensions, pour permettre d'une part, une bonne dispersion de la phase catalytique et d'autre part, une bonne diffusion des gaz à traiter.

Il a déjà été proposé de nombreux procédés de fabrication d'alumine sous forme de poudre, gel ou aggloméré présentant une surface spécifique élevée et avec une répartition des diamètres des pores sensiblement bimodale, à savoir des micropores de diamètre inférieur ou voisin de 10 nm et des macropores de diamètre supérieur à 100 nm. A titre d'exemple, la porosité d'un aggloméré d'alumine peut être obtenue par addition de générateur de pores (porogène) qui se décompose lors du traitement thermique de l'aggloméré ou par des procédés d'agglomération du type charge / liant, la charge étant une poudre d'alumine et le liant étant constitué par un gel d'alumine. Il a également été proposé des procédés de fabrication de poudre ou gel d'alumine présentant une microporosité élevée. Toutefois, les conditions de mise en oeuvre de ces procédés sont très difficiles à contrôler.

Dans les applications de catalyse, l'alumine est généralement utilisée comme support sur lequel sont imprégnés des éléments catalytiques comme des métaux précieux, le molybdène, le vanadium, etc., ainsi que d'autres éléments tels que des promoteurs. A titre d'exemple, on peut citer les terres rares qui sont classiquement utilisées dans la catalyse des gaz d'échappement des moteurs à combustion interne comme stabilisant de la surface spécifique de l'alumine et/ou promoteur par exemple par leur propriété d'oxydo- réduction comme le cérium.

L'alumine est également utilisée pour la réalisation d'un revètement poreux d'une structure compacte appelée monolithique généralement en forme de nids d'abeille et réalisée soit en matériau réfractaire comme les céramiques soit en métal. Dans ce cas, les composés catalytiques tels que les métaux précieux ou les autres éléments tels que les promoteurs sont imprégnés sur la couche d'alumine poreuse déjà déposée sur la structure monolithique.

Jusqu'à présent, ces éléments étaient imprégnés sur une alumine présentant des caractéristiques morprologiques déterminées. Ces imprégnations successives nécessitent un traitement thermique de l'alumine qui peut influencer sa morphologie. De plus, la dispersion des éléments à la surface des pores n'est pas toujours homogène.

On a décrit dans EP-A-0321949 des composés alumine-oxyde de terres rares. Toutefois, ces composés présentent une porosité relativement limitée, d'au plus 0,5 cm3/g après calcination à 1000°C.

US-A-406 1594 décrit aussi un composé à base d'alumine et de terres rares. L'objet de ce document est l'obtention de produit à résistance à l'abrasion améliorée. Les composés décrits ne présentent des surfaces élevées que pour des taux faibles en additifs.

US-A-4 711 872 concerne un produit à base d'aluminate de baryum dont la surface reste relativement peu élevée, et inférieure à 25 m2/g après calcination à 1200°C.

La présente invention a notamment pour objet de remédier à ces différents inconvénients en proposant une composition à base d'alumine active présentant des caractéristiques texturales remarquables, notamment pour une utilisation en catalyse, et un procédé de fabrication de cette composition.

A cet effet, l'invention propose une composition à base d'alumine comprenant au moins un second élément disposé sous forme de cristallites dans l'alumine et choisi dans le groupe comprenant les terres rares et les alcalino-terreux caractérisée en ce que la concentration pondérale du second élément dans la composition est comprise entre 10% et 50%, en ce qu'elle présente un volume poreux correspondant à des pores de diamètre inférieur à 100 nm compris entre 1,2 cm$^3$/g et 3 cm$^3$/g, dont au moins 80% correspond à des pores ayant un diamètre compris entre 10 nm et 100 nm, après un traitement thermique de deux heures à une température de 350°C, en ce qu'elle comprend une phase cristalline pseudoboehmite après ledit traitement thermique et en ce qu'après un traitement thermique de quatre heures à 1200°C, elle présente un volume poreux pour les pores de diamètre inférieur à 100 nm compris entre 0,6 cm$^3$/g et 1,5 cm$^3$/g dont au moins 90%, de préférence au moins 95%, correspond aux pores de diamètre compris entre 20 nm et 100 nm et ainsi qu'après le même traitement thermique, une surface spécifique au moins égale à 25 m$^2$/g.

La concentration pondérale du second élément est avantageusement comprise entre 15 % et 40 %.

Par le terme "terres rares" il faut comprendre les éléments de la famille des lanthanides portant les numéros atomiques 57 à 71 ainsi que l'yttrium portant le n° 39.

Par alcalino terreux, on entend les éléments Beryllium Magnesium, calcium, strontium, baryum.

Selon une autre caractéristique de l'invention, la surface spécifique de la composition est, après un traitement thermique à 350°C pendant 2 heures, au moins égale à 250 m$^2$/g, et après un traitement thermique à 1200°C pendant 4 heures, au moins égale à 25 m$^2$/g, de préférence compris entre 30 et 70 m$^2$/g.

La composition comprend une alumine de structure cristalline pseudoboéhmite, que se présente sous la morphologie de voiles. Cette morphologie a été déterminée par M.E.T. et la structure de la composition est révélée par analyse de diffraction aux rayons X.

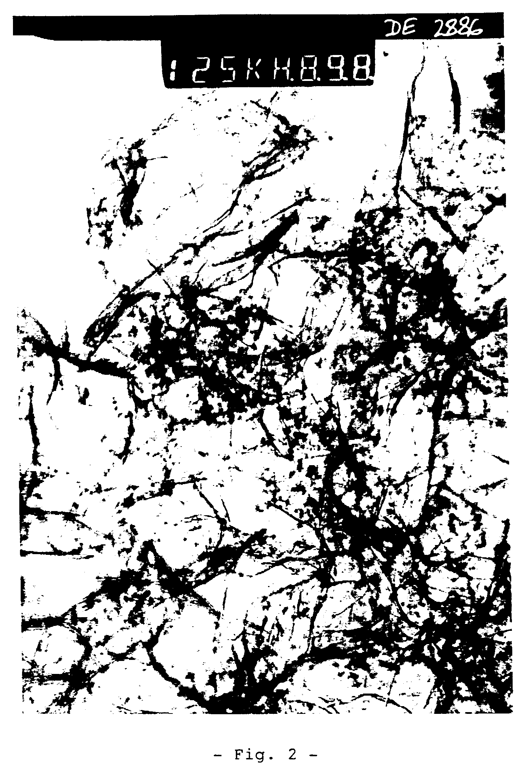

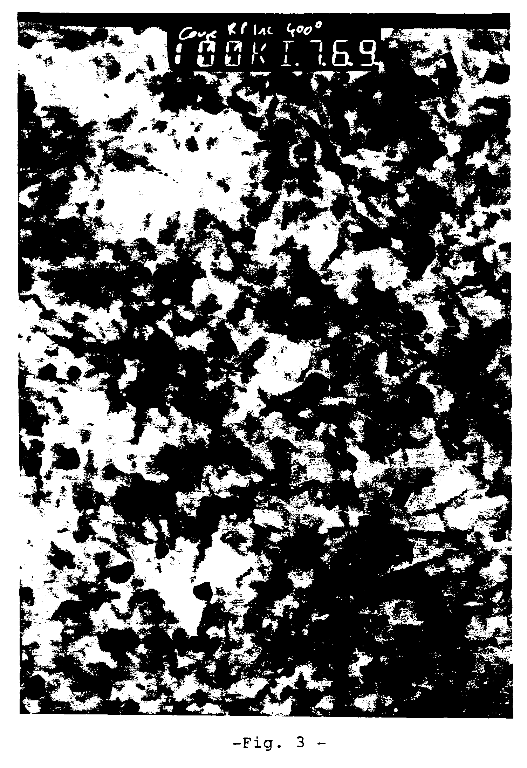

En outre, ces analyses cristallines montrent que le second élément est distribué sous forme de cristallites de faibles dimensions, entre les voiles de pseudoboéhmite comme cela est clairement illustré par les photographies ci jointes (figures 2 et 3).

La taille des cristallites du second élément est fonction de la nature de cet élément. Ainsi pour le cérium, la taille des cristallites est de l'ordre de 5,0 nm après un traitement thermique à 400°C pendant 2 heures, de 10,0 nm après un traitement thermique à 850°C pendant 2 heures et de 19 nm après un traitement thermique à 1100°C pendant 4 heures.

Cette faible taille des cristallites d'oxyde du second élément après un traitement thermique à température élevée est remarquable et permet une meilleure dispersion et donc une meilleure activité catalytique de cet élément.

Cette dispersion de l'oxyde du second élément sous forme de cristallites de petites tailles permet, par exemple, d'améliorer la capacité d'échange avec les métaux précieux tels que le platine lors de l'imprégnation de celui-ci, conduisant à une très bonne dispersion de ce dernier.

Elle permet également, notamment dans le cas de l'oxyde de cérium, d'améliorer la capacité de stockage d'oxygène de cet oxyde comme cela sera clairement montré dans les exemples ci-après.

Comme second élément convenable, on peut citer à titre d'exemple le cérium, le lanthane, le néodyme, le baryum, le calcium, le praséodyme ou un mélange de ceux-ci.

La taille des cristallites d'oxyde du second élément est avantageusement de l'ordre de 5 nm (4 à 6 nm) après que la composition est subie un traitement thermique à 400°C pendant 2 heures, compris entre 7,5 et 13 nm après un traitement thermique à 850°C pendant 2 heures et entre 15 et 35 nm après un traitement thermique à 1100°C pendant 4 Heures.

La composition de l'invention peut contenir des éléments stabilisants de la surface spécifique de l'alumine, de l'oxyde de cérium ou des deux.

Ainsi, par exemple, la composition peut contenir des cations de lanthane ou de baryum, éléments très bien connus pour leur effet de stabilisation de la surface spécifique de l'alumine. Ces éléments peuvent être ajoutés soit par imprégnation de la composition après calcination avec une solution de sels de ceux-ci, ou par addition de sels ou composés de baryum ou lanthane dans la solution d'aluminium et de cérium à l'étape de coprécipitation, par exemple.

La composition de l'invention qui est sous forme de poudre peut être utilisée pour former des supports par agglomération sous forme de billes, extrudés, par exemple, ou pour réaliser des revêtements poreux de structure monolithique ou analogue.

C'est ainsi qu'une des applications préférentielles de la composition de l'invention est la réalisation d'un revêtement ou washcoat poreux d'une structure monolithique en nids d'abeille pour former des catalyseurs de traitement des gaz d'échappement des moteurs à combustion.

Dans cette application, la composition de l'invention est utilisée soit directement comme revêtement d'une structure monolithique, par exemple une structure en nids d'abeille formée en céramique, ou soit en mélange avec de l'alumine active pour ainsi obtenir une composition poreuse sur laquelle pourront être déposés, par exemple par imprégnation, des éléments catalytiques, selon des techniques connues de l'art antérieur.

Selon le catalyseur désiré et la nature des éléments catalytiques, certains de ces éléments sont déposés sur l'alumine et d'autres sur la composition de l'invention avant le mélange de ces deux constituants. Ces procédés de fabrication des catalyseurs sont connus et décrits dans de nombreux brevets.

L'invention a également pour objet un procédé de fabrication d'une composition à base d'alumine telle que décrite précédemment.

Ce procédé consiste à réaliser une solution d'un ou plusieurs composés solubles d'aluminium, par exemple un sel, avec un ou plusieurs composés du ou des seconds éléments, par exemple des sels de ces composés.

Comme composés solubles de l'aluminium on peut citer les chlorure, nitrate, sulfate.

Comme composés solubles du second élément, on peut citer à titre d'exemple les nitrate, acétate, chlorure.

Dans une première étape, appelée étape de précipitation, un agent précipitant est mélangé avec la solution de composés solubles. Cet agent précipitant comprend des ions carbonates, oxalates et/ou carboxylates et des ions hydroxyles.

Selon un mode de réalisation préféré de l'invention, l'agent précipitant a un pH compris entre 3,5 et 9, avantageusement entre 4 et 8.

Cette solution de précipitation est obtenue par addition d'un agent de basification, par exemple une base, dans une solution de carbonate ou d'hydrogénocarbonate, par exemple.

Comme base convenable on peut citer les hydroxydes d'alcalins ou d'alcalino-terreux, l'ammoniaque. Ce dernier est préféré car l'anion ammonium peut être facilement éliminé.

Selon une autre caractéristique de l'invention, la solution de précipitation contient des ions $(CO_3)^=$ et $OH^-$ dans un rapport $(CO_3)^=/OH^-$ compris entre 0,25 et 4.

Selon une autre caractéristique de l'invention, et notamment quand le second élément est le cérium, celui-ci est avantageusement présent sous forme de cérium à l'état d'oxydation 3+.

Les concentrations en aluminium et en second élément de la solution ne sont pas critiques et peuvent varier dans de grandes limites. Toutefois, avantageusement la concentration totale en aluminium et second élément est comprise entre 0,1 mole/l et 4 mole/l.

La concentration en agent précipitant dans la solution de précipitation n'est pas critique, et est notamment limitée par les coefficients de solubilité des composés utilisés.

Le mélange de la solution de précipitation avec la solution contenant le composé d'aluminium peut être effectué de manière quelconque.

Ce mélange est obtenu soit par addition de la solution de précipitation dans la solution d'aluminium avec agitation de cette dernière, soit inversement par addition de la solution d'aluminium dans la solution de précipitation.

Ce mélange peut être réalisé de manière continue ou discontinue, à une température pouvant varier dans de grandes limites, avantageusement cette coprécipitation est réalisée à une température comprise entre la température ambiante (15°C-25°C) et 100°C, de préférence entre 20°C et 60°C.

Par ailleurs, la quantité de solutions mélangées ou les débits des solutions et concentrations des espèces dans ces solutions sont déterminés pour que la quantité d'agent précipitant par rapport aux espèces à précipiter (aluminium et second élément) soit au moins égale à la quantité stoechiométrique, avantageusement supérieure de 5 à 10 % à celle-ci.

Selon un mode de réalisation préféré de l'invention, le coprécipité est obtenu par mélange d'une solution contenant des sels solubles d'aluminium et de cérium avec une solution de carbonate d'ammonium dont le pH a été fixé par addition d'ammoniaque.

Le coprécipité obtenu dans le procédé de l'invention comprend une alumine principalement sous forme amorphe.

Cette alumine sera cristallisée sous forme pseudoboehmite notamment au cours du "traitement hydrothermal" du coprécipité, appelé également étape de mûrissement du précipité.

Le précipité obtenu est ensuite filtré. Il peut également être soumis à un ou plusieurs lavages. Toutefois, ceux-ci ne sont pas obligatoires.

Dans une seconde étape, le précipité est soumis à un traitement hydrothermal pour développer la phase cristalline pseudoboehmite.

Le taux de développement de cette phase cristalline peut représenter jusqu'à 80 à 100 % de l'alumine.

Par l'expression "traitement hydrothermal", on entend un maintien de la composition à des conditions de température et pression déterminées pendant une durée suffisante pour qu'une phase cristalline se développe.

Ainsi, selon un mode de réalisation de l'invention, ce traitement hydrothermal est réalisé par séchage du précipité avec élimination continue des vapeurs émises.

Cette élimination continue des vapeurs émises peut être obtenue par un séchage sous pression réduite ou pression atmosphérique avec un balayage des vapeurs par un courant gazeux, par exemple, un flux d'air ou de gaz inertes (azote) à la surface ou à travers le précipité disposé dans une étuve.

La température de séchage du précipité est avantageusement comprise entre 50°C et 150°C. Cette température sera d'autant plus élevée que la pression sera élevée.

La pression est, à titre indicatif, inférieure à 10000 Pa, avantageusement comprise entre 1000 et 10000 Pa.

La durée du séchage est de l'ordre de 1 heure à 100 heures.

Selon un second mode de réalisation, le traitement hydrothermal est réalisé à une température comprise entre 30°C et 100°C, soit en présence de vapeur d'eau avec une pression supérieure à la pression atmosphérique, soit le produit étant mis en suspension ou repulpé dans de l'eau. La durée de ce traitement est avantageusement inférieure à 2 heures, de préférence de l'ordre de quelques minutes à 1h30. Le produit obtenu est ensuite séché, soit selon le procédé décrit ci-dessus (séchage sous vide ou en étuve) soit par des techniques de séchage rapides comme l'atomisation.

Le produit ainsi traité et séché est ensuite calciné.

Cette dernière opération de calcination peut être réalisée à des conditions très différentes, selon l'utilisation désirée de la composition d'alumine.

Le produit est analysé pour déterminer sa composition, sa texture et également ses propriétés en application de catalyse, notamment pour la réalisation de revêtement ou washcoat de structure monolithique.

D'autres buts, avantages et caractéristiques de l'invention apparaîtront plus clairement au vu des exemples ci-dessous donnés uniquement à titre indicatif.

EXEMPLE 1

On réalise une précipitation en continu par mélange d'une solution contenant du nitrate de cérium (0,068 mole/l) et nitrate d'aluminium (0,939 mole/l) et d'une solution contenant du carbonate d'ammonium (2,774 mole/l) et de l'ammoniaque (0,882 mole/l).

Le mélange est maintenu pendant 1 heure à 25°C avant filtration du coprécipité.

Le précipité est lavé avec de l'eau pour éliminer les ions nitrates

Le coprécipité est ensuite séché sous vide avec une pression égale à 3300 Pa à une température de 80°C pendant une durée de 1 à 100 heures.

Le produit séché est calciné pendant 2 heures à 350°C.

Ce produit est analysé pour déterminer ses caractéristiques texturales et morphologiques. Il contient 20 % en poids de $CeO_2$ par rapport au mélange $CeO_2/Al_2O_3$.

Après une calcination à 350°C pendant 2 heures, la surface spécifique est de 300 m$^2$/g (mesurée par la méthode BET).

Le volume poreux est de 1,6 cm$^3$/g pour des pores de diamètre inférieur à 100 nm, dont 1,4 cm$^3$/g pour les pores de diamètre compris entre 10 et 100 nm (mésoporosité).

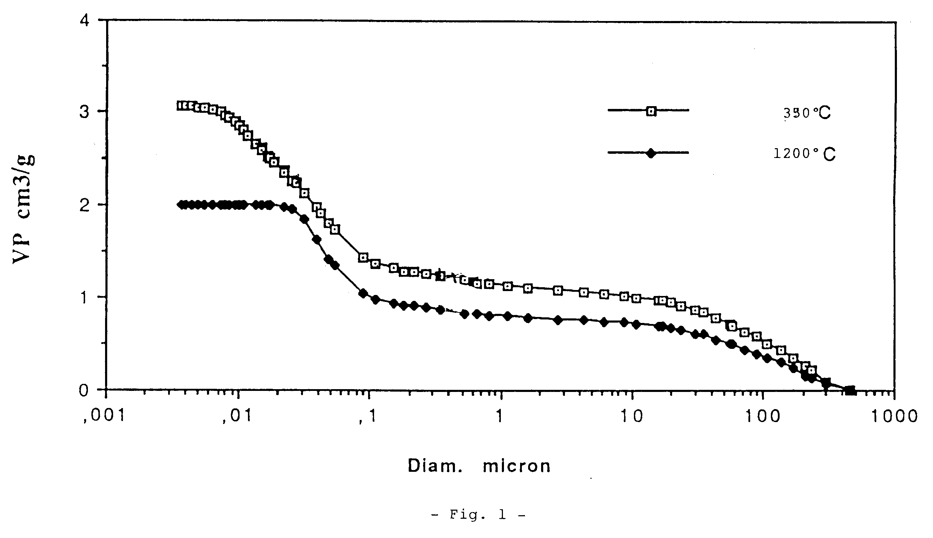

La figure 1 représente la distribution du volume poreux en fonction des diamètres de pore.

L'analyse morphologique du produit montre que l'alumine est sous forme de pseudo-boéhmite en voile, l'oxyde de cérium étant présent entre les voiles sous forme de particules cristallisées de diamètre moyen égal à environ 5 nm (figure 2) déterminé par analyse RX.

Le produit calciné à 1200°C pendant 4 heures présente une surface spécifique de 48 m$^2$/g, un volume poreux de 1,2 cm$^3$/g pour des pores de diamètre inférieur à 100 nm dont 98 % correspond à des pores ayant un diamètre compris entre 20 nm et 100 nm. La texture du matériau obtenu est représentée par la photographie 3.

EXEMPLE 2

Cet essai est réalisé avec un mélange d'une solution contenant 1,862 mole/l de nitrate d'aluminium et 0,138 mole/l de nitrate de cérium et d'une solution contenant 2,773 mole/l de $NH_4HCO_3$ et 0,881 mole/l d'ammoniaque.

Le débit des deux solutions est fixé pour obtenir un rapport $NH_4^+/NO_3^-$ voisin de 1,05.

La précipitation est réalisée sous agitation et à une température de 25°C. Le mélange a un pH variant entre 5,6 et 6,3.

Le précipité est ensuite lavé par de l'eau. Le lavage permet d'éliminer les ions $NO_3^-$ et $NH_4^+$ présents dans le gateau. Ainsi, le lavage est avantageusement poursuivi tant que la concentration pondérale en nitrate et ammonium dans le précipité est supérieur à 0,2 %.

Le précipité ainsi recueilli est soumis à un mûrissement par repulpage du précipité dans de l'eau (6 % de précipité) pendant 15 minutes à 100°C.

Le produit est ensuite séché par atomisation à 150°C puis calciné à différentes températures.

Le produit obtenu qui contient 20 % de cérium, a une surface spécifique de 320 m$^2$/g après calcination de 2 heures à 350°C, un volume poreux de 1,5 cm$^3$/g pour des pores ayant un diamètre compris entre 10 nm et 100 nm (diamètre moyen égal à 30 nm). Ce volume poreux représente 30 % du volume poreux total mais 85 % du volume poreux des pores de diamètre inférieur à 100 nm, le reste de ce volume correspondant à une porosité intergrains de diamètre supérieur à 100 nm qui n'est pas caractéristique de la texture des grains mais uniquement du degré de compactage du matériau.

Ainsi après une telle calcination à 1200°C pendant 4 heures, la surface spécifique est de 34 m$^2$/g et le volume poreux total de 0,9 cm$^3$/g pour des pores de diamètre voisin de 40 nm (diamètre compris entre 20 nm et 100 nm) représentant 100 % du volume poreux pour des pores ayant un diamètre inférieur à 100 nm.

EXEMPLE 3

Cet essai a été réalisé selon l'exemple 2 mais avec une solution contenant 0,032 mole/l de nitrate de cérium et 0,973 mole/l de nitrate d'aluminium.

Le précipité obtenu comprend 10 % en poids de $CeO_2$ et 90 % de $Al_2O_3$.

Les particules de cérium ont un diamètre moyen de 5 nm, dans le produit calciné à 400°C pendant 2 heures.

Ce produit calciné à 1200°C pendant quatre heures a les caractéristiques suivantes :

| surface spécifique | 30 m$^2$/g |
|---|---|

volume poreux des pores de $\varnothing$ compris entre 20 nm et 100 nm : 0,6 cm$^3$ (ce volume poreux représente 99 % du volume poreux des pores de $\varnothing$ < 100 nm).

Les particules d'oxyde de cérium dispersés dans l'alumine ont un diamètre de 35 nm, après calcination à 1100°C pendant 4 heures.

EXEMPLE 4

L'essai 1 est répété mais en utilisant un nitrate de Baryum en mélange avec le nitrate d'aluminium au lieu d'un nitrate de cérium. Le produit obtenu présente un rapport massique BaO/Al$_2$O$_3$ égal à 10 %.

Ce produit calciné à 1200°C pendant 4 heures présente les caractéristiques suivantes :

| surface spécifique | 65 m$^2$/g |
|---|---|
| volume poreux total | 1,8 cm$^3$/g |

volume poreux des pores de $\varnothing$ compris entre 20 nm et 100 nm : 0,8 cm$^3$/g (ce volume poreux représente 99 % du volume poreux des pores de $\varnothing$ < 100 nm).

EXEMPLE 5

L'exemple 1 est répété mais en utilisant un chlorure de cérium en remplacement du nitrate de cérium. La solution contient 0,073 mole/l de chlorure de cérium, 0,932 mole/l de chlorure d'aluminium. La solution de précipitation comprend 0,2774 mole/l de NH$_4$ HCO$_3$ et 0,882 mole/l d'ammoniaque.

Le produit qui contient 20 % en poids de cérium calciné à 1200°C pendant 4 heures a les caractéristiques suivantes :

| surface spécifique | 42 m$^2$/g |
|---|---|
| volume poreux total | 2 cm$^3$/g |

volume poreux des pores de $\varnothing$ compris entre 20 nm et 100 nm : 1 cm$^3$/g (ce volume poreux représente 99 % du volume poreux des pores de $\varnothing$ < 100 nm).

EXEMPLE 6

L'essai 2 est répété mais en utilisant un nitrate de praséodyme en remplacement du nitrate de cérium.

Le produit obtenu qui contient 20 % de Pr$_2$O$_3$, après calcination à 1200°C pendant 4 Heures a les caractéristiques suivantes :

| surface spécifique | 43 m$^2$/g |
|---|---|
| volume poreux total | 1 cm$^3$/g |

volume poreux des pores de $\varnothing$ compris entre 10 nm et 100 nm : 0,8 cm$^3$/g (ce volume poreux représente 99 % du volume poreux des pores de $\varnothing$ < 100 nm).

EXEMPLE 7 (COMPARATIF)

L'exemple 2 est répété mais avec une solution contenant uniquement 3,65 mole/l d'ammoniaque, sans carbonate.

Le coprécipité obtenu présente une surface spécifique de 250 m$^2$/g après calcination à 350°C pendant 2 heures, des pores de diamètre moyen égal à environ 8 nm, et une surface spécifique de 3,5 m$^2$/g après calcination à 1200°C pendant 4 heures.

- Détermination des capacités de stockage d'oxygène :

Pour apprécier la différence de propriété catalytique et notamment l'avantage apporté par le matériau et le procédé de l'invention, on détermine la capacité de stockage d'oxygène du matériau selon le test suuivant :

on soumet une masse de matériau (0,3 g) à un flux de gaz, de l'hélium sous 2 bar et selon un débit de 10 l/h.

Dans ce gaz porteur sont injectés sous forme de pulse soit de l'oxyde de carbone (CO) à une concentration de 5 %, soit de l'oxygène à une concentration de 2,5 %.

On effectue le test selon la séquence suivante :

- montée en température à 400°C sous hélium
- envoi d'une série de pulses d'oxygène
- envoi d'une série de pulses de CO
- envoi d'une nouvelle série de pulses de $O_2$
- envoi en alternance de pulses de CO et de $O_2$

Pour déterminer et apprécier la capacité de stockage on mesure :

- le pourcentage de CO consommé durant le premier pulse de la série de pulses de CO
- consommation cumulée de CO par gramme de $CeO_2$ après la série de pulses de CO
- consommation moyenne de CO par gramme de $CeO_2$ pour chaque pulse de la série de pulses alternées de CO et $O_2$.

Deux matériaux ont été testés :

matériau A conforme à l'invention (exemple 1) calciné à 850°C matériau B obtenu par mélange d'un gel d'alumine (commercialisé sous la dénomination commerciale VERSAL 250) avec un hydrate d'oxyde cérium. Le produit obtenu est séché et calciné à 850°C.

Les résultats sont rassemblés dans le tableau ci-dessous.

| MATERIAU | Pendant la 1ère série de pulses | | Consommation cumulée | | Alternée | |
|---|---|---|---|---|---|---|
| | % CO converti au 1° pulse | mlCO/gCeO2 | mlCO/gCeO2 | CeOx | mlCO/gCeO2 | CeOx |
| A | 23, 4 % | 5,85 | 10,85 | x:1,91 | 5,94 | 1,95 |
| B | 9,7 % | 2,43 | 4,63 | x:1,96 | 2,68 | 1,98 |

Ces résultats démontrent clairement que la quantité d'oxygène stocké par l'oxyde de cérium, c'est à dire disponible pour transformer le monoxyde de carbone en dioxyde est plus importante avec le matériau A conforme à l'invention.

- Détermination du pouvoir de fixation du platine

La capacité d'échange de l'oxyde du second élément, notamment de l'oxyde de cérium vis-à-vis du platine dépend principalement de la surface spécifique de cet oxyde.

Ainsi, il est possible de montrer la grande dispersion de l'oxyde de cérium dans les compositions de l'invention par imprégnation de celle-ci avec du platine et mesure de l'hydrogène chimisorbé sur celui-ci.

Le mode opératoire de ce test est le suivant :

- les supports sont calcinés soit à 400°C, soit à 1100°C
- 10 g de support ainsi calcinés sont additionnés dans 25 ml de solution de $H_2PtCl_6$ à 4 g/l
- le mélange est maintenu sous agitation pendant 3 heures
- la suspension est filtrée sur une membrane millipore de 1,2 nm
- le liquide recueilli est titré par colorimétrie pour déterminer la quantité de platine fixée.

Le support ainsi imprégné, séché et calciné à 400°C est soumis au prétraitement suivant :

- montée en température jusqu'à 400°C à 10°/mn, sous balayage d'argon
- réduction sous hydrogène pur à 400°C pendant 2 heures
- désorption sous argon pur à 400°C pendant 2 heures
- refroidissement à température ambiante, sous balayage d'argon pur ;

Le produit ainsi conditionné est utilisé pour la mesure de chimisorption d'hydrogène à température ambiante à l'aide d'un mélange $H_2$(1 %) - argon.

Le matériau est soumis à un flux de ce mélange gazeux tant que l'hydrogène s'absorbe sur celui-ci (volume $H_1$).

Cette adsorption est suivie d'une désorption par un courant gazeux d'argon tant que de l'hydrogène est présent dans ce courant gazeux.

Un nouveau cycle d'adsorption d'hydrogène est réalisé avec le même mélange gazeux (volume $H_2$).

La différence $H = H_1 - H_2$ correspond à l'adsorption d'une monocouche d'hydrogène sur le platine métallique uniquement. Ce volume d'hydrogène H permet d'estimer la surface du platine directement accessible dans le matériau.

Ce volume H est également appelé le volume (V) d'hydrogène chimisorbé sur le platine.

De ce résultat, on peut estimer la surface de platine accessible par la formule :

$$S = Nsn \, V/Vm$$

dans laquelle :
 S est la surface accessible du platine en $m^2/g$
 N est le nombre d'Avogrado
 s est l'air d'un atome de métal ($8,41 \times 10^{-2}$)
 n est la stoechiométrie de la réaction :

$$Pt + H_2 < \qquad > 2 \, Pt\text{-}H$$

V est le volume d'hydrogène chimisorbé ( V = H ), et Vm est le volume d'hydrogène.
 On peut également estimer la taille des particules métalliques de platine en supposant que les cristallites de platine sont de forme cubique ou de forme sphérique :

- forme cubique : a = 5/S
- forme demi-sphère : d = 6/S

dans lesquelles :
 S est la surface accessible du platine
 est la masse volumique du platine
 a est l'arète du cube, et
 d est le diamètre de la sphère.
 Les résultats obtenus sont rassemblés dans le tableau ci-dessous :

| Echantillon | Température de prétraitement | masse de platine dispersée | Volume (H) de platine chimisorbé $mlH_2/g$ de Pt | $\varnothing$ cristallite de Pt |
|---|---|---|---|---|
| exemple 1 | 400°C | 1 % | 46,8 | 1,2 nm |
|  | 1100°C | 1 % | 50,67 | 1,1 nm |
| exemple 7 comparatif | 400°C | 1 % | 49,7 | 1,1 nm |
|  | 1100°C | 0 % | - | - |
|  | impossible à imprégner 1 % de platine | | | |

Ces résultats montrent qu'il est possible de fixer du platine sur le matériau de l'invention, après un traitement thermique de celui-ci à 1100°C. Au contraire, le matériau comparatif de l'exemple 7 obtenu par imprégnation de cérium sur l'alumine ne permet pas de fixer une quantité suffisante de platine après un prétraitement à 1100°C.
 Cette capacité de fixer du platine même après un traitement à haute température est très importante notamment quand le catalyseur doit être utilisé à des température élevées comme, par exemple, dans le traitement des gaz d'échappement des moteurs à combustion interne.

**Revendications**

1. Composition à base d'alumine comprenant au moins un second élément disposé sous forme de cristallites dans l'alumine et choisi dans le groupe comprenant les terres rares et les alcalino-terreux, caractérisée en ce que la concentration pondérale du second élément dans la composition est comprise entre 10% et 50%, en ce qu'elle présente un volume poreux correspondant à des pores de diamètre inférieur à 100 nm compris entre 1,2 $cm^3/g$ et 3 $cm^3/g$, dont au moins 80% correspond à des pores ayant un diamètre compris entre 10 nm et 100 nm, après un traitement thermique de deux heures à une température de 350°C, en ce qu'elle comprend une phase cristalline pseudoboehmite après ledit traitement thermique et en ce qu'après un traitement thermique de quatre heures à 1200°C, elle présente un volume poreux pour les pores de diamètre inférieur à 100 nm compris entre 0,6 $cm^3/g$ et 1,5 $cm^3/g$ dont au moins 90% correspond aux pores de diamètre compris entre 20 nm et 100 nm ainsi qu'après le même traitement thermique, une surface spécifique au moins égale à 25 $m^2/g$.

**2.** Composition selon la revendication 1, caractérisée en ce qu'elle présente une surface spécifique au moins égale à 250 m$^2$/g, après un traitement thermique à 350°C pendant 2 heures.

**3.** Composition selon la revendication 1 ou 2, caractérisée en ce qu'elle présente une surface spécifique comprise entre 30 et 70 m$^2$/g, après un traitement thermique à 1200°C pendant 4 heures.

**4.** Composition selon l'une des revendications précédentes, caractérisée en ce que la concentration pondérale exprimée en oxyde du second élément est comprise entre 15% et 40% par rapport à la composition.

**5.** Composition selon l'une des revendications précédentes, caractérisée en ce que le taux de cristallisation de l'alumine sous forme de pseudoboehmite est compris entre 80 et 100% de l'alumine totale sur le produit tel quel.

**6.** Composition selon l'une des revendications précedentes, caractérisée en ce que la pseudoboehmite est sous forme de voile.

**7.** Composition selon l'une des revendications précédentes, caractérisée en ce que les particules du second élément ont un diamètre compris entre 15 et 35 nm après calcination à 1100°C.

**8.** Composition selon l'une des revendications précédentes, caractérisé en ce que le second élément est choisi dans le groupe comprenant le lanthane, le cérium, le néodyme, le praséodyme, le baryum ou un mélange de ceux-ci.

**9.** Procédé de fabrication d'une composition selon l'une des revendications précédentes, caractérisé en ce qu'il consiste à :

- réaliser une solution de composés solubles d'aluminium et de composés solubles du second élément;
- à mélanger cette solution avec une composition de précipitation comprenant des ions carbonates, oxalates et/ou carboxyles avec des ions hydroxyles;
- à séparer le précipité obtenu;
- à soumettre le précipité ainsi séparé à un traitement hydrothermal pour développer la phase cristalline pseudoboehmite:
- à sécher éventuellement le produit, et
- à le calciner.

**10.** Procédé selon la revendication 9, caractérisé en ce que la composition de précipitation est un mélange d'ammoniaque et de carbonate d'ammonium.

**11.** Procédé selon la revendication 9 ou 10, caractérisé en ce que les composés solubles d'aluminium sont choisis dans le groupe comprenant les nitrate, sulfate, chlorure.

**12.** Procédé selon l'une des revendications 9 à 11, caractérisé en ce que les composés solubles du second élément sont choisis dans le groupe comprenant nitrate et chlorure.

**13.** Procédé selon l'une des revendications 9 à 12, caractérisé en ce que le précipitant est ajouté dans une quantité stoechiométrique, avantageusement avec un excès de 5 à 10% de celle-ci.

**14.** Procédé selon la revendication 13, caractérisé en ce que la composition de précipitation contient des ions carbonates et hydroxyles dans un rapport $CO_3^=/OH^-$ compris entre 0,25 et 4.

**15.** Procédé selon l'une des revendications 9 à 14, caractérisé en ce que la précipitation est réalisée de manière discontinue par addition du précipitant dans la solution de composés solubles.

**16.** Procédé selon l'une des revendications 9 à 14, caractérisé en ce que la précipitation est réalisée de manière continue.

**17.** Procédé selon l'une des revendications 9 à 16, caractérisé en ce que la précipitation est réalisée à une température comprise entre 20°C et 100°C.

**18.** Procédé selon l'une des revendications 9 à 17, caractérisé en ce que la séparation du précipité est réalisée par filtration ou centrifugation.

19. Procédé selon la revendication 18, caractérisé en ce que le précipité séparé est lavé.

20. Procédé selon l'une des revendications 9 à 19, caractérisé en ce que le traitement hydrothermal est réalisé par séchage du précipité avec élimination continue des vapeurs émises.

21. Procédé selon la revendication 20, caractérisé en ce que le séchage est mis en oeuvre sous pression réduite pour éliminer les vapeurs émises.

22. Procédé selon la revendication 21, caractérisé en ce que le séchage est réalisé sous pression atmosphérique avec un entraînement des vapeurs émis par un balayage gazeux à la surface du précipité.

23. Procédé selon l'une des revendications 20 à 22, caractérisé en ce que la température de séchage est comprise entre 50°C et 150°C.

24. Procédé selon la revendication 21, caractérisé en ce que le séchage est réalisé sous une pression comprise entre 1000 Pa et 10000 Pa.

25. Procédé selon l'une des revendications 9 à 19, caractérisé en ce que le traitement hydrothermal est réalisé sous pression de vapeur d'eau à une température comprise entre 30°C et 100°C pendant une durée inférieure à 2 heures.

26. Procédé selon l'une des revendications 9 à 19, caractérisé en ce que le traitement hydrothermal est réalisé par mise en suspension du précipité dans de l'eau et maintien de la suspension à une température comprise entre 30 et 100°C pendant une durée inférieure à 1 h 30.

27. Procédé selon l'une des revendications 25 ou 26, caractérisé en ce que le précipité est séché à une température comprise entre 80°C et 160°C.

28. Procédé selon l'une des revendications 25 ou 26, caractérisé en ce que le précipité est séché selon le procédé décrit dans l'une des revendications 21 à 24.

29. Procédé selon l'une des revendications 9 à 28, caractérisé en ce que le précipité est calciné à une température comprise entre 300°C et 1200°C.

30. Procédé de fabrication d'un catalyseur du type comprenant un support poreux et des éléments catalytiquement actifs déposés sur ledit support, caractérisé en ce que le support poreux est obtenu par mélange d'alumine active avec la composition, selon l'une des revendications 1 à 8.

31. Procédé selon la revendication 30, caractérisé en ce que le support poreux constitue une couche de revêtement d'une structure monolithique.

32. Procédé selon la revendication 29 à 31, caractérisé en ce que le catalyseur est un catalyseur pour le traitement des gaz d'échappements des moteurs à combustion interne.

**Claims**

1. Alumina-based composition comprising at least one second element arranged in the form of crystallites in the alumina and chosen from the group comprising the rare-earth metals and the alkaline-earth metals, characterized in that the concentration by weight of the second element in the composition is between 10% and 50%, in that it has a pore volume corresponding to pores of a diameter less than 100 nm of between 1.2 $cm^3/g$ and 3 $cm^3/g$, at least 80% of which corresponds to pores having a diameter of between 10 nm and 100 nm, after a heat treatment for two hours at a temperature of 350°C, in that it comprises a pseudo-boehmite crystalline phase after the said heat treatment, and in that it has a pore volume for the pores of diameter less than 100 nm of between 0.6 $cm^3/g$ and 1.5 $cm^3/g$, at least 90% of which corresponds to pores of diameter of between 20 nm and 100 nm, after a heat treatment for four hours at 1200°C, and, after the same heat treatment, a specific surface area of at least 25 $m^2/g$.

2. Composition according to Claim 1, characterized in that it has a specific surface area of at least 250 $m^2/g$ after a heat treatment at 350°C for 2 hours.

3. Composition according to Claim 1 or 2, characterized in that it has a specific surface area of between 30 and 70 $m^2/g$, after a heat treatment at 1200°C for 4 hours.

4. Composition according to one of the preceding claims, characterized in that the concentration by weight expressed as oxide of the second element is between 15% and 40% relative to the composition.

5. Composition according to one of the preceding claims, characterized in that the degree of crystallization of the alumina in the form of pseudo-boehmite is between 80 and 100% of the total alumina on the product as such.

6. Composition according to one of the preceding claims, characterized in that the pseudo-boehmite is in pellicle form.

7. Composition according to one of the preceding claims, characterized in that the particles of the second element have a diameter of between 15 and 35 nm after calcination at 1100°C.

8. Composition according to one of the preceding claims, characterized in that the second element is chosen from the group comprising lanthanum, derium, neodymium, praseodymium, barium or a mixture of these.

9. Process for the production of a composition according to one of the preceding claims, characterized in that it consists in:

   - producing a solution of soluble compounds of aluminium and soluble compounds of the second element,
   - mixing this solution with a precipitation composition containing carbonate, oxalate and/or carboxylate ions with hydroxyl ions,
   - separating off the precipitate obtained,
   - subjecting the precipitate thus separated off to a hydrothermal treatment in order to develop the pseudo-boehmite crystalline phase,
   - drying the product if appropriate, and
   - calcining it.

10. Process according to Claim 9, characterized in that the precipitation composition is a mixture of ammonia and ammonium carbonate.

11. Process according to Claim 9 or 10, characterized in that the soluble aluminium compounds are chosen from the group comprising the nitrate, sulphate and chloride.

12. Process according to one of Claims 9 to 11, characterized in that the soluble compounds of the second element are chosen from the group comprising nitrate and chloride.

13. Process according to one of Claims 9 to 12, characterized in that the precipitant is added in a stoichiometric amount, advantageously with a 5 to 10% excess of the latter.

14. Process according to Claim 13, characterized in that the precipitation composition contains carbonate and hydroxyl ions in a $Co_3^=/OH^-$ ratio of between 0.25 and 4.

15. Process according to one of Claims 9 to 14, characterized in that the precipitation is carried out discontinuously by addition of the precipitant to the solution of soluble compounds.

16. Process according to one of Claims 9 to 14, characterized in that the precipitation is carried out continuously.

17. Process according to one of Claims 9 to 16, characterized in that the precipitation is carried out at a temperature of between 20°C and 100°C.

18. Process according to one of Claims 9 to 17, characterized in that the separation of the precipitate is effected by filtration or centrifuging.

19. Process according to Claim 18, characterized in that the precipitate separated off is washed.

20. Process according to one of Claims 9 to 19, characterized in that the hydrothermal treatment is carried out by drying the precipitate with continuous removal of the vapours produced.

**21.** Process according to Claim 20, characterized in that drying is effected under reduced pressure in order to remove the vapours produced.

**22.** Process according to Claim 21, characterized in that drying is carried out under atmospheric pressure with entraining of the vapours produced by sweeping the surface of the precipitate with a stream of gas.

**23.** Process according to one of Claims 20 to 22, characterized in that the drying temperature is between 50°C and 150°C.

**24.** Process according to Claim 21, characterized in that drying is carried out under a pressure of between 1000 Pa and 10000 Pa.

**25.** Process according to one of Claims 9 to 19, characterized in that the hydrothermal treatment is carried out under water vapour pressure at a temperature of between 30°C and 100°C for a time of less than 2 hours.

**26.** Process according to one of Claims 9 to 19, characterized in that the hydrothermal treatment is carried out by suspending the precipitate in water and keeping the suspension at a temperature of between 30 and 100°C for a time of less than 1 h 30.

**27.** Process according to one of Claims 25 or 26, characterized in that the precipitate is dried at a temperature of between 80°C and 160°C.

**28.** Process according to one of Claims 25 or 26, characterized in that the precipitate is dried by the process described in one of Claims 21 to 24.

**29.** Process according to one of Claims 9 to 28, characterized in that the precipitate is calcined at a temperature of between 300°C and 1200°C.

**30.** Process for the production of a catalyst of the type comprising a porous support and catalytically active elements deposited on the said support, characterized in that the porous support is obtained by mixing active alumina with the composition according to one of Claims 1 to 8.

**31.** Process according to Claim 30, characterized in that the porous support forms a coating layer on a monolithic structure.

**32.** Process according to Claim 29 to 31, characterized in that the catalyst is a catalyst for the treatment of exhaust gases from internal combustion engines.

**Patentansprüche**

**1.** Zusammensetzung auf Basis von Aluminiumoxid, enthaltend mindestens ein zweites Element, angeordnet in Form von im Aluminiumoxid befindlichen Kristalliten und ausgewählt aus der Gruppe von Seltenen Erden und Erdalkalimetallen, dadurch gekennzeichnet,

- daß die Gewichtskonzentration des zweiten Elementes in der Zusammensetzung zwischen 10 % und 50 % liegt,
- daß die Zusammensetzung nach zweistündiger thermischer Behandlung bei einer Temperatur von 350 °C ein Porenvolumen zwischen 1,2 cm$^3$/g und 3 cm$^3$/g aufweist, was Poren mit einem Porendurchmesser unterhalb von 100 nm entspricht, wobei mindestens 80 % der Poren einen Durchmesser zwischen 10 nm und 100 nm aufweisen,
- daß sie nach der thermischen Behandlung eine Pseudoböhmitkristallphase umfaßt und
- daß sie nach vierstündiger thermischer Behandlung bei 1200 °C ein Porenvolumen, entsprechend Poren mit einem Porendurchmesser unterhalb von 100 nm, zwischen 0,6 cm$^3$/g und 1,5 cm$^3$/g aufweist, wobei mindestens 90 % der Poren einen Durchmesser zwischen 20 nm und 100 nm sowie nach derselben thermischen Behandlung eine spezifische Oberfläche von mindestens 25 m$^2$/g aufweisen.

**2.** Zusammensetzung nach Anspruch 1, dadurch gekennzeichnet, daß sie eine spezifische Oberfläche von mindestens 250 m$^2$/g nach einer zweistündigen thermischen Behandlung bei 350 °C aufweist.

3. Zusammensetzung nach Anspruch 1 oder 2, dadurch gekennzeichnet, daß sie eine spezifische Oberfläche zwischen 30 und 70 m²/g nach vierstündiger thermischer Behandlung bei 1200 °C aufweist.

4. Zusammensetzung nach einem der vorhergehenden Ansprüche, dadurch gekennzeichnet, daß die Gewichtskonzentration, berechnet als Oxid des zweiten Elements, zwischen 15 % und 40 % liegt, bezogen auf die Zusammensetzung.

5. Zusammensetzung nach einem der vorhergehenden Ansprüche, dadurch gekennzeichnet, daß der Kristallisationsgehalt des Aluminiumoxids in der Pseudoböhmitform 80 bis 100 % des gesamten Aluminiumoxids auf dem unveränderten Produkt entspricht.

6. Zusammensetzung nach einem der vorhergehenden Ansprüche, dadurch gekennzeichnet, daß das Pseudoböhmit in Schichtform vorliegt.

7. Zusammensetzung nach einem der vorhergehenden Ansprüche, dadurch gekennzeichnet, daß die Teilchen des zweiten Elements einen Durchmesser zwischen 15 und 35 nm nach der Calcinierung bei 1100 °C aufweisen.

8. Zusammensetzung nach einem der vorhergehenden Ansprüche, dadurch gekennzeichnet, daß das zweite Element aus der Gruppe von Lanthan, Cer, Neodym, Praseodym, Barium oder einer Mischung dieser Elemente ausgewählt ist.

9. Verfahren zur Herstellung einer Zusammensetzung nach einem der vorhergehenden Ansprüche, dadurch gekennzeichnet, daß es die folgenden Schritte umfaßt:

   - Herstellen einer Lösung löslicher Aluminiumverbindungen und löslicher Verbindungen des zweiten Elementes;
   - Mischen dieser Lösung mit einer Fällungszusammensetzung, enthaltend Carbonationen, Oxalationen und/oder Carboxylionen mit Hydroxylionen;
   - Trennung des erhaltenen Niederschlags;
   - hydrothermische Behandlung des so abgetrennten Niederschlags, um eine Pseudoböhmitkristallphase zu entwickeln;
   - gegebenenfalls Trocknen des Produktes; und
   - Calcinieren.

10. Verfahren nach Anspruch 9, dadurch gekennzeichnet, daß die Fällungszusammensetzung eine Mischung aus Ammoniak und Ammoniumcarbonat ist.

11. Verfahren nach Anspruch 9 oder 10, dadurch gekennzeichnet, daß die löslichen Aluminiumverbindungen aus der Gruppe von Nitrat, Sulfat und Chlorid ausgewählt sind.

12. Verfahren nach einem der Ansprüche 9 bis 11, dadurch gekennzeichnet, daß die löslichen Verbindungen des zweiten Elements aus der Gruppe von Nitrat und Chlorid ausgewählt sind.

13. Verfahren nach einem der Ansprüche 9 bis 12, dadurch gekennzeichnet, daß das Fällungsmittel in stöchiometrischer Menge, vorzugsweise mit 5 bis 10 % Überschuß, hinzugegeben wird.

14. Verfahren nach Anspruch 13, dadurch gekennzeichnet, daß die Fällungszusammensetzung Carbonat- und Hydroxylionen in einem $CO_3{}^{2-}/OH^-$-Verhältnis zwischen 0,25 und 4 enthält.

15. Verfahren nach einem der Ansprüche 9 bis 14, dadurch gekennzeichnet, daß die Fällung diskontinuierlich durch Zugabe des Fällungsmittels in die Lösung der löslichen Verbindungen durchgeführt wird.

16. Verfahren nach einem der Ansprüche 9 bis 14, dadurch gekennzeichnet, daß die Fällung kontinuierlich durchgeführt wird.

17. Verfahren nach einem der Ansprüche 9 bis 16, dadurch gekennzeichnet, daß die Fällung bei einer Temperatur zwischen 20 °C und 100 °C durchgeführt wird.

18. Verfahren nach einem der Ansprüche 9 bis 17, dadurch gekennzeichnet, daß die Trennung des Niederschlags durch Filtration oder Zentrifugation durchgeführt wird.

19. Verfahren nach Anspruch 18, dadurch gekennzeichnet, daß der abgetrennte Niederschlag gewaschen wird.

20. Verfahren nach einem der Ansprüche 9 bis 19, dadurch gekennzeichnet, daß die hydrothermische Behandlung durch Trocknung des Niederschlages mit kontinuierlicher Eliminierung der freigesetzten Dämpfe durchgeführt wird.

21. Verfahren nach Anspruch 20, dadurch gekennzeichnet, daß die Trocknung unter reduziertem Druck durchgeführt wird, um die freigesetzten Dämpfe zu entfernen.

22. Verfahren nach Anspruch 21, dadurch gekennzeichnet, daß die Trocknung unter Atmosphärendruck durch Mitreißen der freigesetzten Dämpfe mittels eines Gasstromes an der Oberfläche des Niederschlags durchgeführt wird.

23. Verfahren nach einem der Ansprüche 20 bis 22, dadurch gekennzeichnet, daß die Trocknungstemperatur 50 °C bis 150 °C beträgt.

24. Verfahren nach Anspruch 21, dadurch gekennzeichnet, daß die Trocknung unter einem Druck zwischen 1000 Pa und 10000 Pa durchgeführt wird.

25. Verfahren nach einem der Ansprüche 9 bis 19, dadurch gekennzeichnet, daß die hydrothermische Behandlung unter Wasserdampfdruck bei einer Temperatur zwischen 30 °C und 100 °C während einer Dauer von weniger als 2 Stunden durchgeführt wird.

26. Verfahren nach einem der Ansprüche 9 bis 19, dadurch gekennzeichnet, daß die hydrothermische Behandlung durch Suspendierung des Niederschlags in Wasser und Aufrechterhaltung der Suspension bei einer Temperatur zwischen 30 und 100 °C während einer Dauer von weniger als 1 h 30 durchgeführt wird.

27. Verfahren nach einem der Ansprüche 25 oder 26, dadurch gekennzeichnet, daß der Niederschlag bei einer Temperatur zwischen 80 °C und 160 °C getrocknet wird.

28. Verfahren nach einem der Ansprüche 25 oder 26, dadurch gekennzeichnet, daß der Niederschlag gemäß dem in einem der Ansprüche 21 bis 24 beschriebenen Verfahren getrocknet wird.

29. Verfahren nach einem der Ansprüche 9 bis 28, dadurch gekennzeichnet, daß der Niederschlag bei einer Temperatur zwischen 300 °C und 1200 °C calciniert wird.

30. Verfahren zur Herstellung eines Katalysators des Typs, der einen porösen Träger und katalytisch aktive, auf diesem Träger aufgebrachte Elemente enthält, dadurch gekennzeichnet, daß der poröse Träger durch Mischung von aktivem Aluminiumoxid mit der Zusammensetzung nach einem der Ansprüche 1 bis 8 erhalten ist.

31. Verfahren nach Anspruch 30, dadurch gekennzeichnet, daß der poröse Träger eine Überzugsschicht einer monolithischen Struktur darstellt.

32. Verfahren nach Anspruch 29 bis 31, dadurch gekennzeichnet, daß der Katalysator ein Katalysator zur Behandlung von Abgasen aus Verbrennungsmotoren ist.

- Fig. 1 -

- Fig. 2 -

-Fig. 3 -